# EUROPÄISCHE PATENTSCHRIFT

(11) **EP 1 300 326 B1**
(45) Veröffentlichungstag und Bekanntmachung des Hinweises auf die Patenterteilung: **03.11.2004**
(21) Anmeldenummer: 02019517.8
(22) Anmeldetag: 31.08.2002
(51) Int. Cl.: B62D 65/00, B62D 25/08

(54) **Vorrichtung zum Fixieren von Fahrzeug-Karosserieteilen**
Device to join together vehicle body components
Dispositif de fixation pour pièces de carrosserie automobile

(30) Priorität: 04.10.2001 DE 10149003
(43) Veröffentlichungstag der Anmeldung: 09.04.2003
(73) Patentinhaber: Dr.Ing. h.c.F. Porsche Aktiengesellschaft, 70435 Stuttgart (DE)
(72) Erfinder: Polzer, Patrick, 75417 Mühlacker (DE); Eberle, Wilfried, 89584 Ehingen (DE); Jahn, Rüdiger, 71229 Leonberg (DE)

(56) Entgegenhaltungen:
- EP-A- 0 808 765
- DE-A- 19 741 062

## Beschreibung

Die Erfindung bezieht sich auf eine Vorrichtung zum Fixieren von Karosserieteilen, insbesondere eines Heckverkleidungsteils nach dem Oberbegriff des Anspruchs 1.

Aus der gattungsgemässen DE 197 41 062 A1 ist eine Mehrfunktionsschiene zum Sichern und formschlüssigen Montieren, Ausrichten und Fixieren von Karosserieteilen an einem Anbauteil bekannt, die verschiebbar vormontiert ist und hierzu sogenannte Schlüssellöcher aufweist.

Aufgabe der Erfindung ist es, eine Vorrichtung zum Fixieren von Karosserieteilen, insbesondere eines Heckverkleidungsteils an einer Führungsschiene eines Seitenteiles zu schaffen, mit der es in einfacher Weise ermöglicht wird, ein definiertes und dauerhaftes Spaltmaß zwischen dem Seitenteil und dem Heckverkleidungsteil zu gewährleisten.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß mittels einer genau positionierbaren Führungsschiene am jeweiligen Seitenteil des Fahrzeugs eine Heckverkleidungsteil mit einer sogenannten Nullfuge montierbar ist.

Dies wird erfindungsgemäß dadurch erreicht, indem jeweils in einem nach außen des Fahrzeugs gerichteten etwa horizontal verlaufenden Abschnitt eines Seitenteiles eine erste kanalartige Abstützung vorgesehen ist, die in mindestens einem Bereich eine abzweigende, abwärts gerichtete zweite kanalartige Abstützung aufweist. In den beiden Abstützungen ist die Führungsschiene mit korrespondierenden kanalartigen Ausprägungen lagegenau gehalten.

Durch diese Ausbildung des Seitenteils und der darin positioniert angeordneten Führungsschiene wird eine sogenannte Nullfuge zwischen dem Seitenteil und der montierten Heckverkleidung dauerhaft ermöglicht.

Insbesondere ist die erste kanalartige Abstützung an einem Randbereich des Seitenteils in einer vertikalen Ebene angeordnet und im Querschnitt U-profilförmig ausgebildet. An diesem Randbereich des Seitenteils schließt sich ein Halterungsblech für einen Stoßfänger an, in dem teilweise die zweite kanalartige Abstützung angeordnet ist. Somit kann die Heckverkleidung über die Führungsschiene unmittelbar anschließend an den Rand der Seitenverkleidung befestigt werden, wobei die abwärts gerichtete zweite Abstützung durch die Verlängerung im Halterungsblech für den Stoßfänger eine gesicherte Fixierung der Führungsschiene in X-Richtung gewährleistet.

Sowohl die Ausprägungen der Führungsschiene als auch die kanalartigen Abstützungen sind U-profilförmig ausgebildet, so daß eine formschlüssige Aufnahme der Führungsschiene in den kanalartigen Abstützungen gewährleistet ist.

Vorzugsweise weist die Führungsschiene eine im Querschnitt U-profilförmige längliche Ausprägung auf, die in der ersten kanalartigen Abstützung angeordnet ist. Mit einem Schenkel der Ausprägung ist die Führungsschiene an einer Seitenwand der kanalartigen Abstützung positioniert in Z-Richtung gehalten. Durch diese Abstützung der Führungsschiene an der Seitenwand der kanalartigen Abstützung ist auch die Heckverkleidung zum Seitenteil genau zu positionieren und es wird ein stabiles Festsetzen zum Seitenteil erzielt.

Die zweite abzweigende kanalartige Abstützung im Rand des Seitenteils sowie im Rand des Halterungsbleches weist eine Verprägung auf, in welcher die Führungsschiene mit einer Ausprägung in X-Richtung gehalten wird. Da das Seitenteil endseitig eine nach unten gerichtete Ausrundung aufweist, kann über die zweite kanalartige Abstützung ein Anliegen des Heckverkleidungsteiles am Seitenteil mit einer sogenannten Nullfuge erzielt werden.

Durch die beiden kanalartigen Abstützungen im Seitenteil wird somit in vorteilhafter Weise nach der Erfindung ein Anliegen des Heckverkleidungsteiles am Seitenteil mit der Nullfuge erzielt und auch ein Absenken des Heckverkleidungsteiles ist ausgeschlossen, da die Führungsschiene fest fixiert in den beiden kanalartigen Abstützungen des Seitenteiles gehalten wird.

Ein Ausführungsbeispiel der Erfindung ist in den Zeichnungen dargestellt und wird im folgenden näher beschrieben.

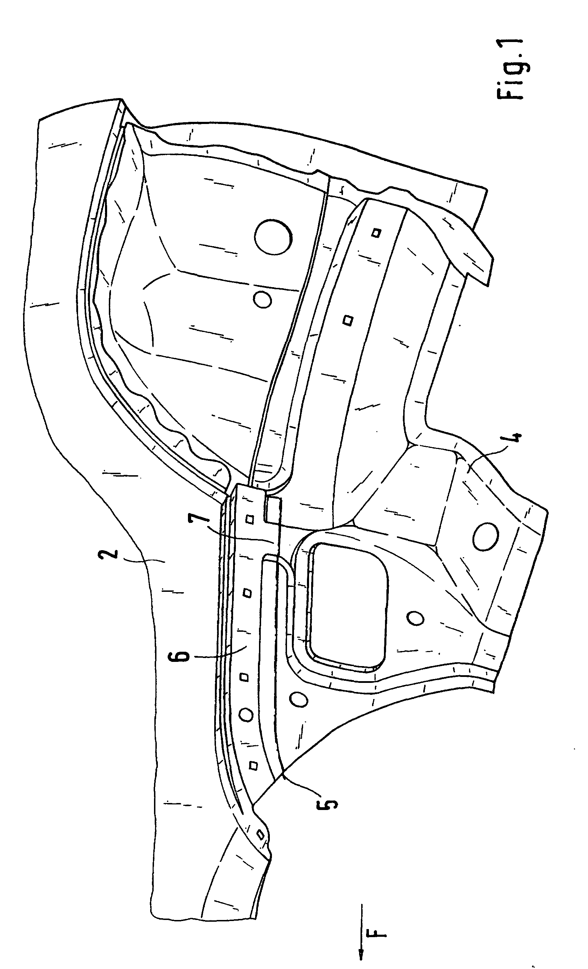

Es zeigen
- Fig. 1: eine Ansicht von außen auf ein in Fahrtrichtung gesehen linkes Seitenteil des Fahrzeugaufbaus mit verbundenem Halterungsblech für einen Stoßfänger und zwei kanalartigen Abstützungen im Seitenteil bzw. im Halterungsblech,

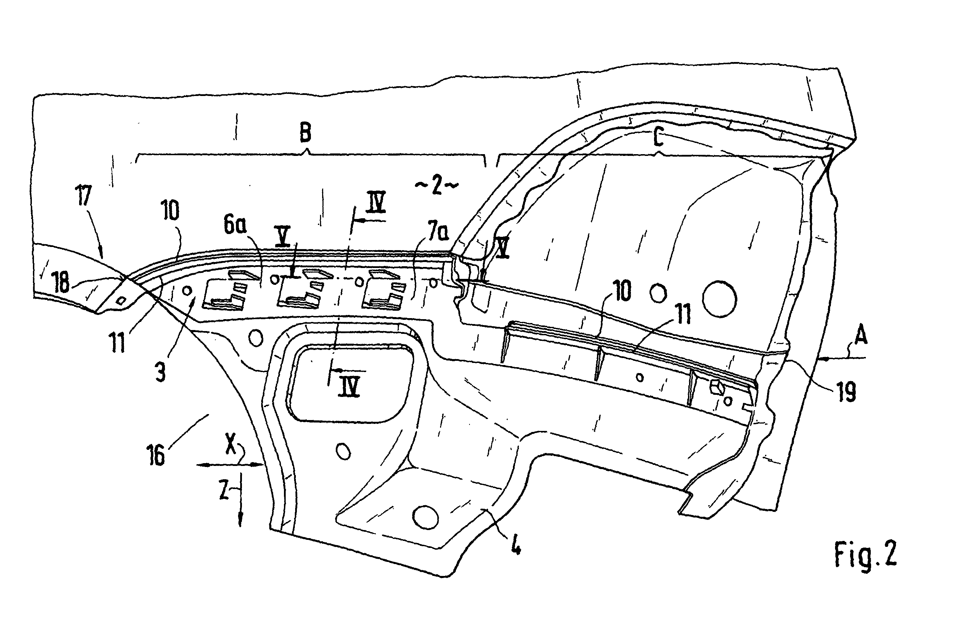

- Fig. 2: eine Ansicht gem. Fig. 1 mit einer in den kanalartigen Abstützungen eingesetzten Führungsschiene,

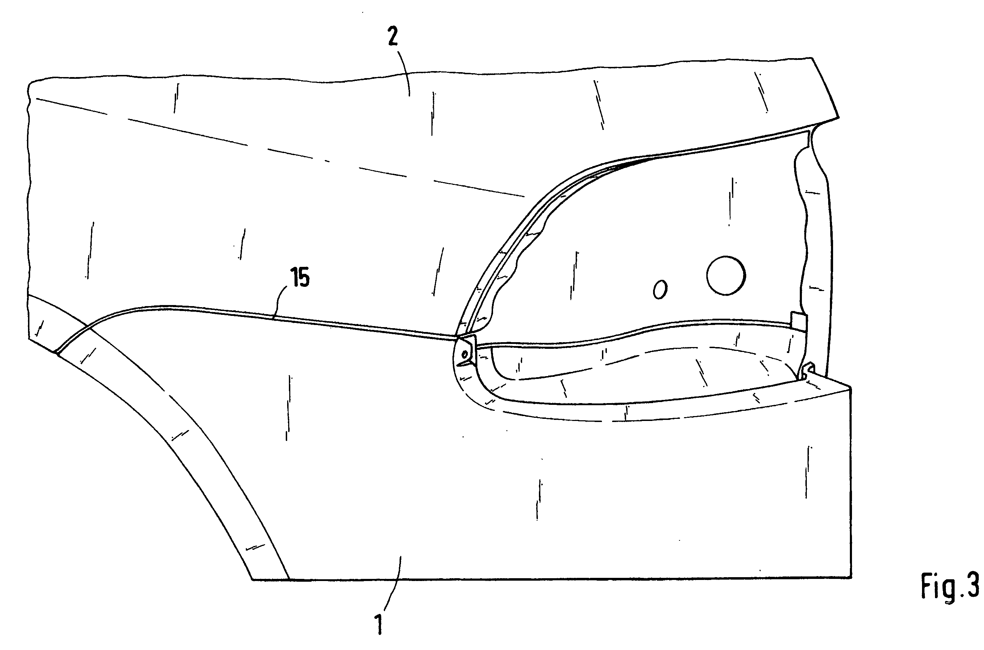

- Fig. 3: eine Ansicht gem. der Fig. 1 und 2 mit verbundenem Heckverkleidungsteil,
- Fig. 4: einen Schnitt durch das Seitenteil mit Führungsschiene gem. der Linie IV-IV der Fig. 2 und
- Fig. 5: einen Schnitt durch das Seitenteil mit Führungsschiene gem. der Linie V-V der Fig. 2.

Die Vorrichtung zum Fixieren von Karosserieteilen, insbesondere eines Heckverkleidungsteiles 1 an einem Seitenteil 2 eines Kraftfahrzeugs umfaßt im wesentlichen eine Führungsschiene 3, die mit dem Seitenteil 2 und einem mit diesem verbundenen Halterungsblech 4 für einen Stoßfänger ausgeführt ist.

An einer unteren Verbindungskante 5 des Seitenteiles 2 ist ein Halterungsblech 4 befestigt und das Seitenteil 2 weist eine kanalartige etwa horizontal verlaufende erste Abstützung 6 auf, die im hinteren Abschnitt eine abwärts gerichtete zweite kanalartige Abstützung 7 besitzt, die sich teilweise ins Halterungsblech 4 hinein erstreckt. Diese kanalartigen Abstützungen 6 und 7 bestehen aus Einprägungen und sind im Querschnitt U-profilförmig ausgeführt.

In diese kanalartigen Abstützungen wird das Führungsprofil 3 eingesetzt, das korrespondierend zu diesen Abstützungen 6, 7 ebenfalls im Querschnitt aus einer Ausprägung in Form eines U-Profils 6a besteht und im hinteren Bereich eine abwärts gerichtete Aussparung 7a entsprechend der Abstützung 7 aufweist.

Die Führungsschiene 3 weist zur Aufnahme des Heckverkleidungsteiles 1 Schenkel oder Laschen 10, 11 auf, zwischen denen ein Rand des Heckverkleidungsteiles 1 in Pfeilrichtung A eingeschoben und an der Führungsschiene 3 befestigt wird.

In der kanalartigen Abstützung 6 ist die Führungsschiene 3 über Schraubmittel 13 befestigt, so daß eine stabile Lage gewährleistet ist. Eine Abstützung der Führungsschiene 3 in Z-Richtung erfolgt an der Seitenwand 14 der kanalartigen Abstützung 6. In X-Richtung hält sich die Führungsschiene 3 in der abwärts gerichteten Abstützung 7 an den entsprechenden seitlichen Wandteilen.

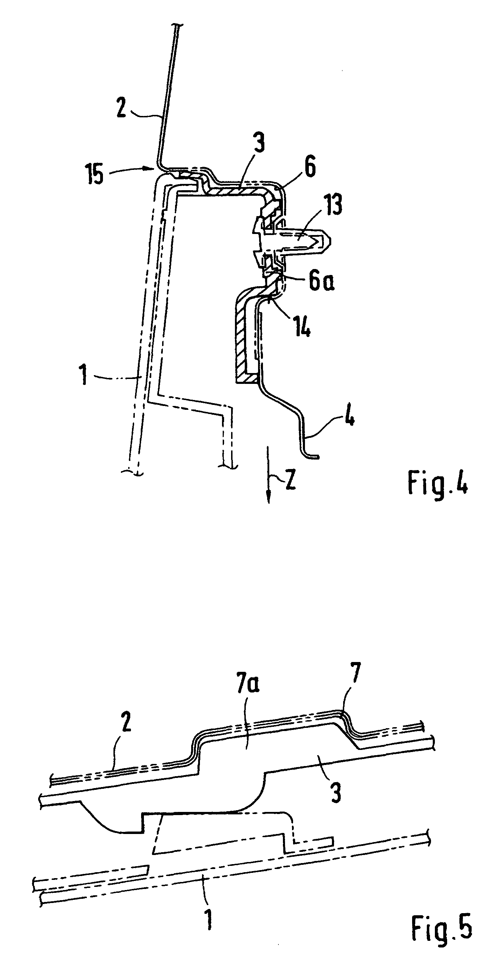

Durch diese Abstützung in Z- und X-Richtung wird eine lagegenaue Halterung des Heckverkleidungsteiles 1 am Seitenteil 2 mit einer sogenannten Nullfuge 15 erzielt, das heißt, die Teile 1 und 2 liegen paßgenau aneinander, was in Fig. 4 näher dargestellt ist.

Das Seitenteil 2 weist an einem dem Radausschnitt 16 zugerichteten Ende 17 eine abwärts gerichtete Ausrundung 18 auf; entsprechend ist auch die Führungsschiene 3 ausgeführt. Durch die ebenfalls abwärts gerichtete Führungsschiene 3 in diesem Bereich wird durch die Abstützung 7 zwangsweise ein dichtes Anliegen des Heckverkleidungsteiles 1 am Seitenteil 2 erzielt.

Das Führungsprofil 3 erstreckt sich vorzugsweise vom ausgerundeten Ende 17 des Seitenteiles 2 bis zum hinteren Ende 19 des Seitenteiles 2 bzw. des Halterungsbleches 4, wobei sich die kanalartige Abstützung 6 im Seitenteil 2 nur über einen begrenzten Bereich B erstreckt. Im weiteren Bereich C des Seitenteiles 2 bzw. des Halterungsbleches 4 ist die Führungsschiene 3 mit dem Halterungsblech 4 unmittelbar ohne kanalartige Abstützung verbunden.

## Patentansprüche

1. Vorrichtung zum Fixieren von Fahrzeug-Karosserieteilen, insbesondere einer Heckverkleidung (1) eines Kraftfahrzeuges in einer Führungsschiene (3), die mit dem Fahrzeugaufbau verbunden ist und Aufnahmeschenkel für die zu fixierenden Karosserieteile aufweist, **dadurch gekennzeichnet, daß** jeweils in einem nach außen des Fahrzeugs gerichteten etwa horizontal verlaufenden Abschnitt eines Seitenteils (2) des Fahrzeugs eine erste kanalartige Abstützung (6) vorgesehen ist, die in mindestens einem Bereich eine abzweigende, abwärts gerichtete zweite kanalartige Abstützung (7) aufweist und in den beiden Abstützungen (6, 7) die Führungsschiene (3) mit korrespondierenden kanalartigen Ausprägungen (6a, 7a) gehalten ist.

2. Vorrichtung nach Anspruch 1, **dadurch gekennzeichnet, daß** die erste kanalartige Abstützung (6) an einem Randbereich des Seitenteils (2) in einer etwa vertikalen Ebene angeordnet und im Querschnitt U-profilförmig ausgebildet ist und an den Randbereich ein Halterungsblech (4) für einen Stoßfänger anschließt, in dem teilweise die zweite kanalartige Abstützung (7) fortgeführt ist.

3. Vorrichtung nach den Ansprüchen 1 oder 2, **dadurch gekennzeichnet, daß** die Führungsschiene (3) eine im Querschnitt U-profilförmige längliche Ausprägung (6a) aufweist, die in der ersten kanalartigen Abstützung (6) angeordnet ist und mit einem unteren Schenkel der Ausprägung (6a) an einer Seitenwand (14) der kanalartigen Abstützung (6) positioniert in vertikaler Richtung gehalten wird.

4. Vorrichtung nach einem oder mehreren der vorhergehenden Ansprüche, **dadurch gekennzeichnet, daß** die zweite kanalartige Abstützung (7) im Rand des Seitenteiles (2) sowie im Rand des Halterungsbleches (4) eine Verprägung aufweist, in welcher die Führungsschiene (3) mit einer Ausprägung (7a) in Fahrtrichtung des Fahrzeugs gehalten wird.

5. Vorrichtung nach einem oder mehreren der vorhergehenden Ansprüche, **dadurch gekennzeichnet, daß** die Führungsschiene (3) mit einem Ende über einen Bereich (B) einerseits am Seitenteil (2) in den beiden kanalartigen Abstützungen (6, 7) gehalten und andererseits mit seinem anderen Ende über einen Bereich (C) am Halterungsblech (4) befestigt ist.

6. Vorrichtung nach Anspruch 1 oder einem der vorhergehenden Ansprüche, **dadurch gekennzeichnet, daß** die Führungsschiene (3) am freien Ende der ersten kanalartigen Abstützung (6) eine dem Seitenteil (2) entsprechenden bogenförmigen Verlauf (18) aufweist und ein in die Führungsschiene (3) einsetzbares und festsetzbares Heckverkleidungsteil (1) an einer Fugenkante (15) des Seitenteils (2) in Fahrt- und seitlicher Richtung fixiert anliegend ist.

## Claims

1. A device for fixing vehicle-bodywork parts, in particular a tail panel (1), of a motor vehicle in a guide rail (3), which is connected to the vehicle body and has receiving arms for the bodywork parts which are to be fixed, **characterized in that** a first channel-like support (6), which in at least one region has a branching, second channel-like support (7) directed downwards, is provided in a portion - directed towards the outside of the vehicle and extending substantially horizontally - of a lateral part (2) of the vehicle, and the guide rail (3) is held in the two supports (6, 7) by corresponding channel-like pressed-out portions (6a, 7a).

2. A device according to Claim 1, **characterized in that** the first channel-like support (6) is arranged on an edge region of the lateral part (2) in a substantially vertical plane and has a U-shaped profile in cross-section, and the edge region is adjoined by a retaining plate (4) for a bumper, in which the second channel-like support (7) is continued in part.

3. A device according to Claims 1 or 2, **characterized in that** the guide rail (3) has an elongate pressed-out portion (6a) which has a U-shaped profile in cross-section and which is arranged in the first channel-like support (6) and is held positioned in the vertical direction by a lower arm of the pressed-out portion (6a) on a lateral wall (14) of the channel-like support (6).

4. A device according to one or more of the preceding Claims, **characterized in that** the second channel-like support (7) has an impressed portion in the edge of the lateral part (2) as well as in the edge of the retaining plate (4), the guide rail (3) being held by a pressed-out portion (7a) in the said impressed portion in the direction of travel of the vehicle.

5. A device according to one or more of the preceding Claims, **characterized in that** the guide rail (3) is held at one end by way of a region (B) on the lateral part (2) in the two channel-like supports (6, 7) on one side and at its other end by way of a region (C) on the retaining plate (4) on the other side.

6. A device according to Claim 1 or one of the preceding Claims, **characterized in that** at the free end of the first channel-like support (6) the guide rail (3) has a curved shape (18) corresponding to the lateral part (2), and a tail-panel part (1), which can be inserted and fastened into the guide rail (3), rests in a fixed manner in the direction of travel and in the lateral direction on a joint edge (15) of the lateral part (2).

## Revendications

1. Dispositif de fixation de parties de la carrosserie d'un véhicule, en particulier d'un habillage arrière (1) d'un véhicule automobile dans un rail de guidage (3) qui est relié à la carrosserie du véhicule, et comporte des brides de réception pour les parties à fixer de la carrosserie, **caractérisé en ce que** dans une section s'étendant approximativement horizontalement et dirigée vers l'extérieur du véhicule, d'une partie latérale (2) du véhicule, il est prévu un premier appui (6) de type canal qui comporte, dans au moins une zone, un deuxième appui (7), de type canal, dirigé vers le bas, et le rail de guidage (3) est maintenu dans les deux appuis (6, 7) par des bossages (6a, 7a) de type canal correspondantes.

2. Dispositif selon la revendication 1, **caractérisé en ce que** le premier appui (6) de type canal est disposé dans une zone de bordure de la partie latérale (2), dans un plan approximativement vertical, et présente une section transversale de profil en U, et à la zone de bordure se raccorde une tôle de fixation (4) pour un pare-chocs dans lequel le deuxième appui (7) de type canal se poursuit en partie.

3. Dispositif selon les revendications 1 ou 2, **caractérisé en ce que** le rail de guidage (3) présente un bossage (6a) allongé de section transversale à profil en U, qui est disposé dans le premier appui (6) de type canal et est maintenu dans la direction verticale, positionné par une branche inférieure du bossage (6a), contre une paroi latérale (14) de l'appui (6) de type canal.

4. Dispositif selon une ou plusieurs des revendications précédentes, **caractérisé en ce que** le deuxième appui (7) de type canal présente, dans le bord de la partie latérale (2) ainsi que dans le bord de la tôle de fixation (4), une empreinte dans laquelle le rail de guidage (3) est maintenu dans la direction de marche du véhicule, par un bossage (7a).

5. Dispositif selon une ou plusieurs des revendications précédentes, **caractérisé en ce que** le rail de guidage (3) est maintenu par une extrémité, par une zone B d'une part sur la partie latérale (2), dans les deux appuis (6, 7) de type canal et, d'autre part, il est fixé par son autre extrémité, par une zone C, sur la tôle de fixation (4).

6. Dispositif selon la revendication 1 ou l'une des revendications précédentes, **caractérisé en ce que** le rail de guidage (3) présente, à l'extrémité libre du premier appui (6) de type canal, une allure (18) en arc correspondant à la partie latérale (2), et un élément d'habillage arrière (1), pouvant être inséré et fixé dans le rail de guidage (3), est fixé de manière à s'appliquer contre un bord de joint (115) de la partie latérale (2), dans la direction de marche et la direction latérale.
